# FASCICULE DE BREVET EUROPEEN

(11) **EP 2 706 730 B1**
(45) Date de publication et mention de la délivrance du brevet: **13.07.2016**
(21) Numéro de dépôt: 13179439.8
(22) Date de dépôt: 06.08.2013
(51) Int. Cl.: H04L 29/08, G06F 9/00, H04W 4/00, G06F 17/30, H04M 1/00, H04M 3/00, H04L 29/12, G06F 3/048, H04W 4/16, H04M 1/725

(54) **Procédé et dispositif de suggestion d'applications**
Verfahren und Vorrichtung zum Vorschlagen von Anwendungen
Method and apparatus for suggesting applications

(30) Priorité: 07.09.2012 FR 1258387
(43) Date de publication de la demande: 12.03.2014
(73) Titulaire: Orange, 75015 Paris (FR)
(72) Inventeur: Bouvet, Bertrand, 22700 Perros-Guirec (FR)
(74) Mandataire: Delumeau, François Guy

(56) Documents cités:
- US-A1- 2011 022 468
- US-A1- 2011 307 354
- US-A1- 2012 208 592

## Description

### Arrière-plan de l'invention

La présente invention se situe dans le domaine de la distribution d'applications sur terminaux (mobiles, TV, téléphones de la maison,...), et concerne en particulier la suggestion d'applications.

Un exemple de méthode de suggestion d'applications est donné dans le document US2011/0022468 et dans le document US 2011/307354.

De façon générale, le nombre d'applications disponibles sur le marché augmente de façon exponentielle. Par conséquent, il est difficile pour l'utilisateur d'un terminal d'identifier les applications susceptibles de lui convenir, a fortiori celles compatibles avec son terminal.

Corrélativement, lorsqu'une entreprise propose une nouvelle application, il est souhaitable qu'elle puisse informer les utilisateurs possédant un terminal compatible de sa disponibilité.

### Objet et résumé de l'invention

L'invention est définie par les revendications indépendantes 1, 9-11 et 13.

Un des buts de l'invention est de remédier aux inconvénients précités.

A cet effet, l'invention concerne un procédé de suggestion d'une application mis en oeuvre par un terminal, l'application étant compatible avec le système d'exploitation du terminal.

Ce procédé comporte :
- une étape de détermination d'au moins une structure de données susceptible de comporter des identifiants,
- une étape de sélection d'au moins un identifiant mémorisé dans la structure de données,
- une étape de génération, à partir de l'identifiant sélectionné, d'un nom de domaine comportant au moins une indication du système d'exploitation du terminal,
- une étape d'envoi du nom de domaine à un serveur apte à fournir un lien d'accès correspondant au nom de domaine,
- une étape de réception d'un lien d'accès au téléchargement de l'application, en réponse à l'étape d'envoi, et
- une étape de restitution d'un message suggérant à l'utilisateur du terminal de télécharger l'application en utilisant ce lien d'accès.

Corrélativement, l'invention concerne aussi un dispositif de suggestion d'une application pouvant être incorporé dans un terminal, l'application étant compatible avec le système d'exploitation du terminal.

Ce dispositif comprend :
- un module de détermination d'au moins une structure de données susceptible de comporter des identifiants,
- un module de sélection d'au moins un identifiant mémorisé dans la structure de données,
- un module de génération, à partir de l'identifiant sélectionné, d'un nom de domaine comportant au moins une indication du système d'exploitation du terminal,
- un module d'envoi du nom de domaine à un serveur apte à fournir un lien d'accès correspondant au nom de domaine,
- un module de réception d'un lien d'accès au téléchargement de l'application, en réponse à cet envoi,
- un module de restitution d'un message suggérant à l'utilisateur du terminal de télécharger l'application en utilisant ce lien d'accès.

L'invention concerne également un système de suggestion d'applications comprenant un terminal comportant un dispositif de suggestion tel que mentionné ci-dessus, et un serveur apte à associer un identifiant à une application.

Le procédé selon l'invention peut notamment être mis en oeuvre au démarrage du terminal et/ou avant/pendant/après chaque session de communication.

Par session de communication, on entend de manière non limitative toute session de communication entrante ou sortante audio, vidéo, image, web, de messagerie instantanée, mail.

De façon générale, l'invention permet de suggérer le téléchargement d'une application compatible avec le terminal d'un utilisateur, cette application étant associée à un identifiant présent sur le terminal, sans que l'utilisateur n'ait à faire d'action pour rechercher une telle application.

Ainsi, dans le cas où il n'existe pas d'application compatible avec le terminal de l'utilisateur, celui-ci n'est pas exposé à la publicité d'une application qui ne le concerne pas.

Le fait d'utiliser un identifiant présent sur le terminal de l'utilisateur permet de s'assurer que l'utilisateur a déjà volontairement interagi ou va interagir avec ce contact, induisant un certain niveau de confiance envers ce contact.

Le message de l'étape de restitution peut être par exemple un message écrit, un message vocal, une image, ou une vidéo.

L'indication du système d'exploitation du terminal peut être par exemple le type de système d'exploitation et sa version.

En variante, l'indication pourrait comporter la marque du terminal ou le type de terminal ou toute autre information susceptible d'aider à l'évaluation de la compatibilité de l'application avec le système d'exploitation du terminal.

Dans un mode particulier de réalisation de l'invention, l'étape de restitution propose en outre à l'utilisateur de choisir l'une des options suivantes : « télécharger immédiatement », « télécharger plus tard », « ne pas télécharger », « désactiver le procédé ». De plus, le procédé comprend, sauf lorsque l'option choisie est de « désactiver le procédé », une étape de mémorisation de l'identifiant sélectionné dans une mémoire, en association avec l'option choisie par l'utilisateur ; l'étape de sélection consiste à écarter les identifiants associés, dans la mémoire, à l'option « télécharger immédiatement » ou à l'option « ne pas télécharger ».

Ainsi l'utilisateur peut choisir ou non de télécharger l'application suggérée, et ceci lorsqu'il le souhaite.

Par exemple, si l'utilisateur ne souhaite télécharger l'application suggérée que lorsque son terminal est connecté à un certain réseau de télécommunications, par exemple un réseau Wi-Fi, il peut reporter le téléchargement tant qu'il n'est pas connecté à un tel réseau.

Dans un mode particulier de réalisation de l'invention, la structure de données est un carnet d'adresses du terminal, un journal d'appels, un journal de service de messagerie audio-visuelle, un journal de messagerie instantanée, un journal de communications mail, un dossier de favoris, un historique de navigation web.

Dans un mode particulier de réalisation de l'invention, l'identifiant est un numéro de téléphone, et l'étape de génération est basée sur la norme *Electronic NUMbering* (ENUM), le serveur étant un serveur DNS ENUM.

Dans ce mode de réalisation, le dispositif de suggestion comprend un client ENUM apte à communiquer avec un serveur DNS ENUM.

L'utilisation de la norme ENUM permet d'associer un identifiant téléphonique à une application, et l'utilisation d'un serveur DNS ENUM permet de couvrir toutes les applications associées aux numéros de téléphone de tous les pays, la norme ENUM prévoyant l'internationalisation du numéro de téléphone avant de le transformer en nom de domaine.

En variante, l'identifiant peut être par exemple une adresse email, une adresse SIP, un identifiant de réseau social, de messagerie instantanée ou une URL web.

Par exemple, lors de la consultation d'un site web par le terminal, le procédé selon l'invention pourrait suggérer le téléchargement d'une application compatible avec le terminal liée à l'URL de ce site web, si une telle application existe.

Lorsque l'identifiant n'est pas un numéro de téléphone, l'usage d'un serveur de type DNS est également possible. Dans le cas, par exemple, d'une adresse email, la partie utilisateur de l'adresse peut devenir un sous-domaine. Ainsi, pour l'adresse email utilisateur@orange.com, le nom de domaine pourrait être du type utilisateur.orange.com.OS.invention.fr.

Dans un mode particulier de réalisation de l'invention, le procédé comprend une étape de téléchargement de l'application suggérée à l'étape de restitution et une étape de démarrage automatique de cette application au cours d'une session de communication établie avec le contact identifié par cet identifiant.

L'utilisateur n'a pas à lancer volontairement l'application téléchargée lorsqu'il contacte le contact dont l'identifiant est associé à cette application.

Dans ce mode particulier, l'invention permet, en reprenant l'exemple du site web ci-dessus, de lancer automatiquement l'application mobile précédemment téléchargée dès que l'utilisateur consulte le site web précité à partir de son terminal mobile.

Dans un mode particulier de réalisation de l'invention, le procédé comprend une étape de fermeture automatique de ladite application lors de la fermeture de la session de communication.

De même, l'utilisateur n'a pas à fermer l'application après avoir terminé la session de communication avec le contact dont l'identifiant est associé à cette application.

De cette façon, la batterie du terminal est optimisée car l'application n'est pas maintenue ouverte inutilement en tâche de fond après la fin de la session de communication.

Dans un mode particulier de réalisation de l'invention, l'application prend le contrôle de la session de communication.

Cette prise de contrôle peut par exemple se faire au niveau de l'établissement de la session, ou de sa mise en attente, ou de sa renégociation. Cette prise de contrôle peut aussi consister par exemple à suspendre la session de communication, ou à la libérer.

Dans un mode particulier de réalisation de l'invention, les étapes du procédé précité sont déterminées par les instructions d'un programme d'ordinateur.

En conséquence, l'invention vise aussi un programme d'ordinateur comportant des instructions pour la mise en oeuvre des étapes du procédé tel que décrit ci-dessus, lorsque le programme est exécuté par un processeur.

Ce procédé peut utiliser n'importe quel langage de programmation, aussi bien sous la forme de code source que d'objet ou de code intermédiaire, dans une forme partiellement compilée ou dans n'importe quelle autre forme interprétable par un ordinateur.

L'invention vise aussi un support d'information lisible par un ordinateur et comportant les instructions d'un programme d'ordinateur tel que mentionné ci-dessus.

Ce support d'information peut être n'importe quelle entité ou dispositif capable de stocker le programme. Par exemple, le support peut être un moyen de stockage tel qu'une mémoire ROM, un CDROM ou une ROM de circuit micro-électronique ou encore un moyen d'enregistrement magnétique par exemple une disquette (*floppy disc*) ou un disque dur.

D'autre part, le support d'information peut être un support transmissible tel qu'un signal électrique ou optique qui peut être acheminé via un câble électrique ou optique, par radio ou par d'autres moyens. Le programme selon l'invention peut être en particulier téléchargé sur un outil Internet.

Alternativement, le support d'information peut être un circuit intégré dans lequel le programme d'ordinateur est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures:
- la figure 1 représente schématiquement un exemple de système de suggestion d'applications selon l'invention,
- la figure 2 représente sous forme d'organigramme, les principales étapes d'un procédé de suggestion d'applications mis en oeuvre par le dispositif de suggestion de la figure 1.

### Description détaillée de l'invention

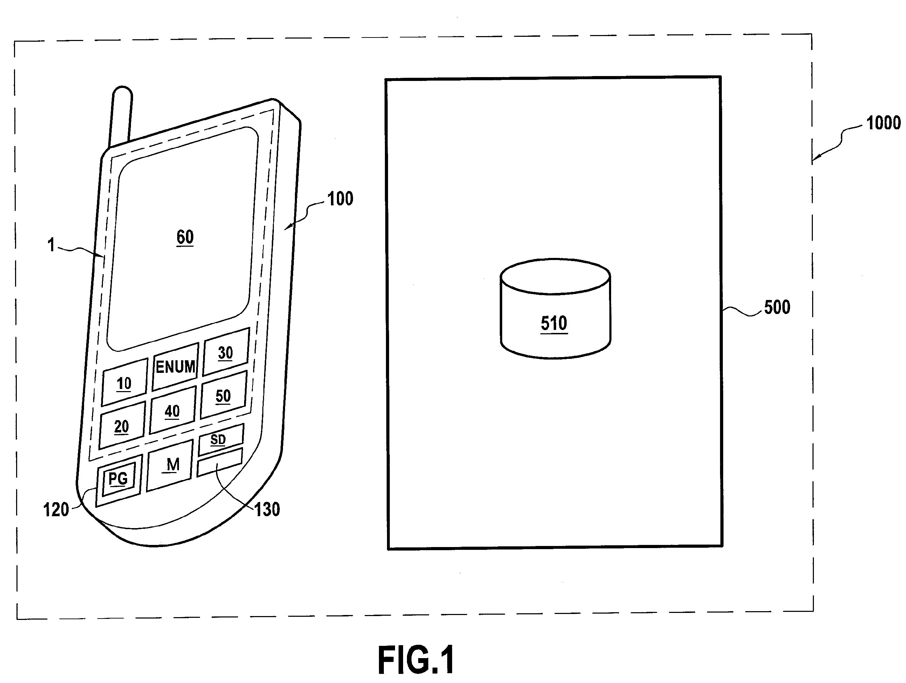

La **figure 1** représente un système 1000 conforme à un mode de réalisation de l'invention.

Le système 1000 comprend un terminal 100 comportant notamment un dispositif de suggestion 1 conforme à l'invention, et un serveur 500.

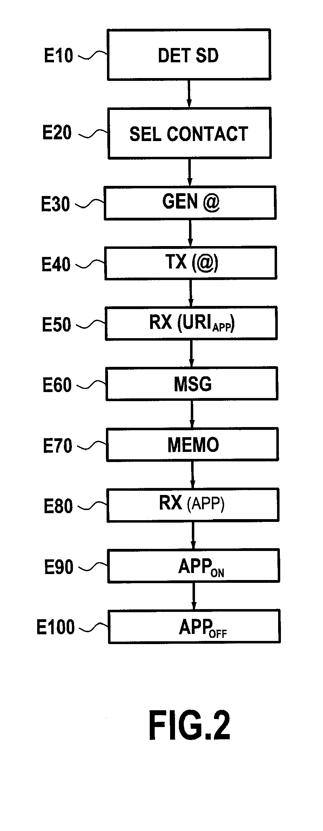

Dans l'exemple de réalisation décrit ici, le terminal 100 a l'architecture matérielle d'un téléphone portable. Il comporte notamment un processeur 130 et une mémoire morte 120. Cette mémoire morte 120 constitue un support selon l'invention dont l'exécution met en oeuvre les étapes de l'organigramme de la figure 2.

Le terminal 100 comporte en outre une structure de données SD comportant des identifiants, ainsi qu'une mémoire M dans laquelle certains de ces identifiants sont mémorisés en association avec, pour chaque identifiant, une information indiquant si le téléchargement d'une application a été réalisé (option « télécharger maintenant »), repoussé (option « télécharger plus tard ») ou annulé (option « ne pas télécharger »).

Le dispositif de suggestion 1 embarqué dans le terminal 100 comporte un module de détermination 10 d'une structure de données SD afin d'y sélectionner un identifiant que l'utilisateur n'a pas déjà refusé d'associer à une application et n'ayant pas déjà d'application associée sur le terminal. A cet effet, le dispositif de suggestion 1 comporte un module de sélection 20 fonctionnant, dans cet exemple, en coopération avec la mémoire M. En pratique, le module de sélection 20 vérifie en lisant dans la mémoire M que l'identifiant n'est pas associé à l'option « télécharger maintenant » ni à l'option « ne pas télécharger ».

Le dispositif de suggestion 1 comporte en outre un module de génération 30 d'un nom de domaine ensuite envoyé au serveur 500 grâce à un module d'envoi 40 du dispositif de suggestion 1.

Dans cet exemple, le dispositif de suggestion 1 embarque un client ENUM et les échanges entre le serveur 500 et le terminal sont conformes à la norme ENUM.

De façon connue, la norme ENUM permet d'associer un identifiant téléphonique à une application. En particulier, cette norme permet de transformer un numéro de téléphone en numéro de téléphone international (ajout du préfixe 33 pour la France), puis de transformer ce dernier en un nom de domaine en commençant par la fin du numéro de téléphone. On ajoute ensuite un suffixe constitué d'indications (notées OS) sur système d'exploitation. Ainsi l'utilisation de la norme ENUM et l'ajout du suffixe permettent d'obtenir un nom de domaine au sens de l'invention.

Dans cet exemple, le serveur 500 est un serveur DNS ENUM. Il comporte notamment une base de données 510 dans laquelle des identifiants, dans cet exemple des identifiants téléphoniques, sont répertoriés en association avec des liens d'accès au téléchargement d'applications. En particulier, lorsqu'il existe plusieurs liens d'accès pour un même identifiant, cela signifie que l'application existe pour différents systèmes d'exploitation.

Ainsi, lorsque le serveur DNS ENUM reçoit le nom de domaine de la part du module d'envoi 40 du dispositif de suggestion, il en extrait l'identifiant téléphonique et interroge la base de données 510 afin de déterminer si une application compatible y est associée.

Lorsqu'il n'existe pas d'application pour cet identifiant téléphonique ou qu'il existe une application pour cet identifiant mais qu'elle n'est pas compatible avec le système d'exploitation du terminal, le serveur DNS ENUM 500 renvoi une réponse de type « *no such entry* » à un module de réception 50 et la suggestion n'a pas lieu.

Au contraire, lorsqu'une application compatible est associée à l'identifiant téléphonique dans la base de données 510, le serveur DNS ENUM 500 renvoi le lien d'accès au téléchargement de cette application au module de réception 50 et un module de restitution 60, en coopération avec une interface homme-machine du terminal 100 restitue un message suggérant à l'utilisateur de télécharger cette application.

La **figure 2** représente sous forme d'organigramme les principales étapes d'un procédé de suggestion d'applications mis en oeuvre par le dispositif de suggestion 1 embarqué sur le terminal 100, déjà décrit en référence à la figure 1.

Le procédé tel que décrit ci-dessous peut être mis en oeuvre au démarrage du terminal et/ou avant/pendant/après chaque session de communication.

Au cours d'une étape E10, le dispositif de suggestion détermine les structures de données SD susceptibles de contenir des identifiants. Dans cet exemple, la structure de données SD est le journal d'appels du terminal et contient deux numéros de téléphone, à savoir le 3900 et le 3700.

Le dispositif de suggestion vérifie si le numéro 3900 est présent dans la mémoire M du terminal. Dans cet exemple, ce n'est pas le cas, le numéro 3900 est donc sélectionné (étape E20).

En revanche, le numéro 3700 est présent dans la mémoire M et y est associé avec l'option « ne pas télécharger », par conséquent le numéro 3700 n'est pas sélectionné.

Au cours d'une étape E30, le dispositif de suggestion génère un nom de domaine, à partir du numéro 3900 et d'indications sur le système d'exploitation du terminal. Dans notre exemple, l'utilisation de la norme ENUM et l'ajout du suffixe correspondant pour le système Android version 2.2 conduit par exemple au nom de domaine suivant : 0.0.9.3.3.3.version22.android.invention.fr.

On notera dans cet exemple l'utilisation de deux indications du système d'exploitation du terminal au sens de l'invention, à savoir le type de système d'exploitation (Android) et sa version (2.2).

Au cours de l'étape E40, le dispositif de suggestion envoi ce nom de domaine à un serveur DNS ENUM 500. En pratique, le dispositif de suggestion formule une requête DNS, qui serait dans notre exemple du type QUERY NAPTR 0.0.9.3.3.3.version22.android.invention.fr. Dans cet exemple, il existe une application compatible pour ce numéro de téléphone. Le serveur 500 retourne alors un lien d'accès URI_{APP} (pour *Uniform Resource Identifier)* au téléchargement de l'application correspondante, ce lien étant reçu par le dispositif de suggestion à l'étape E50.

Suite à l'étape E50, le dispositif de suggestion restitue (étape E60) un message à l'utilisateur du terminal par l'intermédiaire d'une interface homme-machine adaptée du terminal. Dans notre exemple, le message propose quatre options à l'utilisateur :
- « télécharger immédiatement ;
- « télécharger plus tard », dans ce cas le téléchargement est repoussé jusqu'à la prochaine mise en oeuvre du procédé ;
- « ne pas télécharger », dans ce cas la suggestion d'applications pour cet identifiant est désactivée ;
- « désactiver le procédé ».

De façon générale, quelle que soit l'option choisie par l'utilisateur, ce choix n'est pas irréversible. En effet, il existe un mode dans lequel l'utilisateur peut interagir avec cette mémoire M via les paramètres de configuration classiques du terminal, pour par exemple effacer le contenu de cette mémoire ou encore changer certaines options. Typiquement, lorsque l'utilisateur a désactivé le procédé, il peut le réactiver ultérieurement.

Dans notre exemple, l'utilisateur choisit, via l'interface homme-machine, de télécharger l'application suggérée. Au cours de l'étape E70, le numéro 3900 en association avec l'option choisie, à savoir télécharger immédiatement, est mémorisé dans la mémoire M et le téléchargement s'effectue (étape E80).

Ainsi, lors d'une mise en oeuvre ultérieure du procédé, lors de l'étape de sélection (E20), le numéro 3900 sera écarté de la sélection puisque l'option associée dans la mémoire M signifie qu'une application associée à ce numéro est déjà téléchargée sur le terminal.

Quelque temps plus tard, l'utilisateur cherche à joindre le numéro 3900. Alors que la session de communication s'établit, l'application précédemment téléchargée s'ouvre automatiquement (App_{ON}) à l'étape E90.

Dans notre exemple, l'application prend le contrôle de la session de communication : l'appel n'est établi qu'après que l'utilisateur ait saisi certaines informations dans un formulaire de l'application, via l'utilisation d'une fonction de rappel ou mode *callback* en anglais.

En variante, l'application peut ne pas avoir d'impact sur la session de communication, elle peut être simplement exécutée en tâche de fond.

Lorsque l'utilisateur raccroche l'appel, l'application se termine automatiquement (App_{OFF}) au cours d'une étape E100. Ainsi, quel que soit l'impact de l'application sur la session de communication, son exécution se termine et l'application ne tourne pas indéfiniment en tâche de fond, évitant ainsi le déchargement de la batterie du terminal, ou encore l'encombrement de la mémoire vive.

De façon générale, l'invention peut être mise en oeuvre dans un contexte de centre d'appel. Dans un tel contexte, les différents services proposés par un acteur peuvent s'atteindre via un seul numéro court, la phase de qualification permettant d'aiguiller l'appel vers le service adapté. La mise en oeuvre du procédé décrit précédemment permet de limiter l'attente de l'appelant en prenant en charge la phase de qualification d'appel. Ainsi l'expérience client en est considérablement améliorée.

## Revendications

1. Procédé de suggestion d'une application mis en oeuvre par un terminal, le procédé comportant :
- une étape de détermination (E10) d'au moins une structure de données (SD) susceptible de comporter des identifiants de contact ;
- une étape de sélection (E20) d'au moins un identifiant mémorisé dans ladite au moins une structure de données (SD) ;
- une étape de génération (E30), à partir dudit au moins un identifiant sélectionné, d'un nom de domaine comportant au moins une indication du système d'exploitation dudit terminal ;
- une étape d'envoi (E40) dudit nom de domaine à un serveur (500) apte à fournir un lien d'accès au téléchargement de ladite application, ledit lien d'accès étant associé audit nom de domaine ;
- une étape de réception (E50) dudit lien d'accès en provenance dudit serveur; et
- une étape de restitution (E60) d'un message suggérant à l'utilisateur du terminal de télécharger ladite application en utilisant ledit lien d'accès, ladite application étant compatible avec le système d'exploitation du terminal.

2. Procédé de suggestion selon la revendication 1, **caractérisé en ce que** le procédé est mis en oeuvre avant ou pendant une session de communication.

3. Procédé de suggestion automatique selon l'une quelconque des revendications 1 à 2, **caractérisé en ce que** ladite étape de restitution (E60) propose en outre à l'utilisateur de choisir l'une des options suivantes : « télécharger immédiatement », « télécharger plus tard », « ne pas télécharger », « désactiver ledit procédé » ; et **caractérisé en ce qu'**il comprend, sauf lorsque l'option choisie est de désactiver ledit procédé, une étape de mémorisation (E70) dudit au moins un identifiant sélectionné dans une mémoire (M), en association avec ladite option choisie par l'utilisateur ; et **en ce que** ladite étape de sélection (E20) consiste à écarter les identifiants associés, dans ladite mémoire (M), à l'option « télécharger immédiatement » ou à l'option « ne pas télécharger ».

4. Procédé de suggestion automatique selon l'une quelconque des revendications 1 à 3, **caractérisé en ce que** ladite structure de données est un carnet d'adresses du terminal, un journal d'appels, un journal de service de messagerie audio-visuelle, un journal de messagerie instantané, un journal de communications mail, un dossier de favoris, un historique de navigation web.

5. Procédé de suggestion selon l'une quelconque des revendications 1 à 4, **caractérisé en ce qu'**il comprend :
- une étape de téléchargement (E80) de ladite application suggérée à ladite étape de restitution (E60) ;
- une étape de démarrage automatique (E90) de ladite application au cours d'une session de communication établie avec le contact identifié par cet identifiant.

6. Procédé de suggestion selon la revendication 5, **caractérisé en ce qu'**il comprend une étape de fermeture automatique (E100) de ladite application lors de la fermeture de ladite session de communication.

7. Procédé selon l'une quelconque des revendications 5 à 6, **caractérisé en ce que** ladite application prend le contrôle de ladite session de communication.

8. Procédé selon l'une quelconque des revendications 1 à 7, **caractérisé en ce que** ledit identifiant est un numéro de téléphone, et **caractérisé en ce que** ladite étape de génération (E30) est basée sur la norme Electronic NUMbering, ENUM, ledit serveur (500) étant un serveur DNS ENUM.

9. Programme d'ordinateur (PG) comportant des instructions pour l'exécution du procédé selon l'une quelconque des revendications 1 à 8 lorsque ledit programme est exécuté par un processeur (130).

10. Support d'enregistrement (120) lisible par un ordinateur sur lequel est enregistré un programme d'ordinateur (PG) comprenant des instructions pour l'exécution du procédé selon l'une quelconque des revendications 1 à 8.

11. Dispositif (1) de suggestion d'une application pouvant être incorporé dans un terminal (100), ledit dispositif comprenant :
- un module de détermination (10) d'au moins une structure de données (SD) susceptible de comporter des identifiants de contact ;
- un module de sélection (20) d'au moins un identifiant mémorisé dans ladite au moins une structure de données (SD) ;
- un module de génération (30), à partir dudit au moins un identifiant sélectionné, d'un nom de domaine comportant au moins une indication du système d'exploitation dudit terminal (100) ;
- un module d'envoi (40) dudit nom de domaine à un serveur (500) apte à fournir un lien d'accès au téléchargement de ladite application, ledit lien d'accès étant associé audit nom de domaine ;
- un module de réception (50) dudit lien d'accès en provenance dudit serveur; et
- un module de restitution (60) d'un message suggérant à l'utilisateur du terminal de télécharger ladite application en utilisant ledit lien d'accès, ladite application étant compatible avec le système d'exploitation dudit terminal.

12. Dispositif (1) de suggestion automatique selon la revendication 11, **caractérisé en ce qu'**il comprend un client ENUM apte à communiquer avec un serveur (500) DNS ENUM.

13. Système (1000) de suggestion d'applications comprenant :
- un terminal (100) comportant un dispositif (1) de suggestion selon l'une quelconque des revendications 11 à 12 ;
- un serveur (500) apte à fournir un lien d'accès au téléchargement d'une application, ledit lien d'accès étant associé à un nom de domaine généré par le terminal (100) à partir d'au moins un identifiant de contact et comportant au moins une indication du système d'exploitation dudit terminal (100).

## Patentansprüche

1. Verfahren zum Vorschlagen einer Anwendung, welches von einem Terminal durchgeführt wird, wobei das Verfahren umfasst:
- einen Schritt der Bestimmung (E10) mindestens einer Datenstruktur (SD), die dafür empfänglich ist, Kontaktidentifikatoren zu umfassen;
- einen Schritt der Auswahl (E20) mindestens eines Identifikators, der in der mindestens einen Datenstruktur (SD) gespeichert ist;
- einen Schritt der Generierung (E30), auf der Basis des mindestens einen ausgewählten Identifikators, eines Domänennamens, der mindestens eine Indikation des Betriebssystems des Terminals umfasst;
- einen Schritt des Sendens (E40) des Domänennamens an einen Server (500), der geeignet ist, eine Zugangsverbindung für das Herunterladen der Anwendung bereitzustellen, wobei die Zugangsverbindung dem Domänennamen zugeordnet ist;
- einen Schritt des Empfangs (E50) der Zugangsverbindung, die von dem Server stammt; und
- einen Schritt der Wiedergabe (E60) einer Nachricht, die dem Benutzer des Terminals vorschlägt, die Anwendung unter Verwendung der Zugangsverbindung herunterzuladen, wobei die Anwendung mit dem Betriebssystem des Terminals kompatibel ist.

2. Verfahren zum Vorschlagen nach Anspruch 1,
**dadurch gekennzeichnet, dass** das Verfahren vor oder während einer Kommunikationssitzung durchgeführt wird.

3. Verfahren zum automatischen Vorschlagen nach einem der Ansprüche 1 bis 2,
**dadurch gekennzeichnet, dass** der Schritt der Wiedergabe (E60) dem Benutzer außerdem vorschlägt, eine der folgenden Optionen auszuwählen: "sofort herunterladen", "später herunterladen", "nicht herunterladen", "das Verfahren deaktivieren";
und **dadurch gekennzeichnet, dass** dieses, außer wenn die ausgewählte Option ist, das Verfahren zu deaktivieren, einen Schritt der Speicherung (E70) des mindestens einen ausgewählten Identifikators in einem Speicher (M) umfasst, welcher der von dem Benutzer ausgewählten Option zugeordnet ist;
und dass dieser Schritt der Auswahl (E20) aus dem Verwerfen der Identifikatoren besteht, die in dem Speicher (M) der Option "sofort herunterladen" oder der Option "nicht herunterladen" zugeordnet sind.

4. Verfahren zum automatischen Vorschlagen nach einem der Ansprüche 1 bis 3,
**dadurch gekennzeichnet, dass** die Datenstruktur ein Adressbuch des Terminals, eine Anrufliste, ein Dienstprotokoll audiovisueller Nachrichten, ein Instant Messaging-Protokoll, ein Mail-Kommunikationsprotokoll, eine Favoritenliste, ein Web-Navigationsverlauf ist.

5. Verfahren zum Vorschlagen nach einem der Ansprüche 1 bis 4,
**dadurch gekennzeichnet, dass** dieses umfasst:
- einen Schritt des Herunterladens (E80) der Anwendung, die im Schritt der Wiedergabe (E60) vorgeschlagen wird;
- einen Schritt des automatischen Starts (E90) der Anwendung während einer Kommunikationssitzung, die durch diesen Identifikator mit dem identifizierten Kontakt hergestellt wird.

6. Verfahren zum Vorschlagen nach Anspruch 5,
**dadurch gekennzeichnet, dass** dieses einen Schritt des automatischen Schließens (E100) der Anwendung beim Schließen der Kommunikationssitzung umfasst.

7. Verfahren nach einem der Ansprüche 5 bis 6,
**dadurch gekennzeichnet, dass** die Anwendung die Steuerung der Kommunikationssitzung übernimmt.

8. Verfahren nach einem der Ansprüche 1 bis 7,
**dadurch gekennzeichnet, dass** der Identifikator eine Telefonnummer ist,
und **dadurch gekennzeichnet, dass** der Schritt der Generierung (E30) auf der Norm für die elektronische Nummerierung ENUM basiert, wobei der Server (500) ein DNS ENUM-Server ist.

9. Rechnerprogramm (PG), welches Instruktionen zur Ausführung des Verfahrens nach einem der Ansprüche 1 bis 8 umfasst, wenn das Programm von einem Prozessor (130) ausgeführt wird.

10. Aufzeichnungsmedium (120), welches von einem Rechner lesbar ist, auf dem ein Rechnerprogramm (PG) aufgezeichnet ist, das Instruktionen zur Ausführung des Verfahrens nach einem der Ansprüche 1 bis 8 umfasst.

11. Vorrichtung (1) zum Vorschlagen einer Anwendung, welche in einem Terminal (100) eingeschlossen sein kann, wobei die Vorrichtung umfasst:
- ein Modul zur Bestimmung (10) mindestens einer Datenstruktur (SD), die dafür empfänglich ist, Kontaktidentifikatoren zu umfassen;
- ein Modul zur Auswahl (20) mindestens eines Identifikators, der in der mindestens einen Datenstruktur (SD) gespeichert ist;
- ein Modul zur Generierung (30), auf der Basis des mindestens einen ausgewählten Identifikators, eines Domänennamens, der mindestens eine Indikation des Betriebssystems des Terminals (100) umfasst;
- ein Modul zum Senden (40) des Domänennamens an einen Server (500), der geeignet ist, eine Zugangsverbindung für das Herunterladen der Anwendung bereitzustellen, wobei die Zugangsverbindung dem Domänennamen zugeordnet ist;
- ein Modul zum Empfang (50) der Zugangsverbindung, die von dem Server stammt; und
- ein Modul der Wiedergabe (60) einer Nachricht, die dem Benutzer des Terminals vorschlägt, die Anwendung unter Verwendung der Zugangsverbindung herunterzuladen, wobei die Anwendung mit dem Betriebssystem des Terminals kompatibel ist.

12. Vorrichtung (1) zum automatischen Vorschlagen nach Anspruch 11,
**dadurch gekennzeichnet, dass** diese einen ENUM-Client umfasst, der geeignet ist, mit einem DNS ENUM-Server (500) zu kommunizieren.

13. System (1000) zum Vorschlagen von Anwendungen, umfassend:
- einen Terminal (100), der eine Vorrichtung (1) zum Vorschlagen nach einem der Ansprüche 11 bis 12 umfasst;
- einen Server (500), der geeignet ist, eine Zugangsverbindung zum Herunterladen einer Anwendung bereitzustellen, wobei die Zugangsverbindung einem Domänennamen zugeordnet ist, der von dem Terminal (100) auf der Basis mindestens eines Kontaktidentifikators generiert wird und mindestens eine Indikation des Betriebssystems des Terminals (100) umfasst.

## Claims

1. Method of suggestion, implemented by a terminal, for suggesting an application, the method comprising:
- a step (E10) of determining at least one data structure (SD) liable to comprise contact identifiers;
- a step (E20) of selecting at least one identifier stored in the said at least one data structure (SD);
- a step (E30) of generating, on the basis of the said at least one identifier selected, a domain name comprising at least one indication of the operating system of the said terminal;
- a step (E40) of dispatching the said domain name to a server (500) able to provide a link for access to the download of the said application, the said access link being associated with the said domain name;
- a step (E50) of receiving the said access link from the said server; and
- a step (E60) of playing back a message suggesting to the user of the terminal that he download the said application by using the said access link, the said application being compatible with the operating system of the terminal.

2. Method of suggestion according to Claim 1, **characterized in that** the method is implemented before or during a communication session.

3. Method of automatic suggestion according to either one of Claims 1 to 2, **characterized in that** the said playback step (E60) furthermore prompts the user to choose one of the following options: "download immediately", "download later", "don't download", "deactivate the said method"; and **characterized in that** it comprises, except when the option chosen is to deactivate the said method, a step (E70) of storing the said at least one identifier selected in a memory (M), in association with the said option chosen by the user; and **in that** the said selecting step (E20) consists in discarding the identifiers associated, in the said memory (M), with the "download immediately" option or with the "don't download" option.

4. Method of automatic suggestion according to any one of Claims 1 to 3, **characterized in that** the said data structure is an address book of the terminal, a call log, an audio-visual messaging service log, an instant messaging log, a mail communications log, a folder of favourites, a Web browsing history.

5. Method of suggestion according to any one of Claims 1 to 4, **characterized in that** it comprises:
- a step (E80) of downloading the said application suggested in the said playback step (E60);
- a step (E90) of automatic starting of the said application in the course of a communication session established with the contact identified by this identifier.

6. Method of suggestion according to Claim 5, **characterized in that** it comprises a step (E100) of automatic closing of the said application during the closing of the said communication session.

7. Method according to any one of Claims 5 to 6, **characterized in that** the said application takes control of the said communication session.

8. Method according to any one of Claims 1 to 7, **characterized in that** the said identifier is a telephone number, and **characterized in that** the said generating step (E30) is based on the Electronic NUMbering standard ENUM, the said server (500) being an ENUM DNS server.

9. Computer program (PG) comprising instructions for the execution of the method according to any one of Claims 1 to 8 when the said program is executed by a processor (130).

10. Recording medium (120) readable by a computer on which is recorded a computer program (PG) comprising instructions for the execution of the method according to any one of Claims 1 to 8.

11. Suggestion device (1) for suggesting an application and which can be incorporated into a terminal (100), the said device comprising:
- a module (10) for determining at least one data structure (SD) liable to comprise contact identifiers;
- a module (20) for selecting at least one identifier stored in the said at least one data structure (SD);
- a module (30) for generating, on the basis of the said at least one identifier selected, a domain name comprising at least one indication of the operating system of the said terminal (100);
- a module (40) for dispatching the said domain name to a server (500) able to provide a link for access to the download of the said application, the said access link being associated with the said domain name;
- a module (50) for receiving the said access link from the said server; and
- a module (60) for playing back a message suggesting to the user of the terminal that he download the said application by using the said access link, the said application being compatible with the operating system of the said terminal.

12. Automatic suggestion device (1) according to Claim 11, **characterized in that** it comprises an ENUM client able to communicate with an ENUM DNS server (500).

13. System (1000) for suggesting applications comprising:
- a terminal (100) comprising a suggestion device (1) according to any one of Claims 11 to 12;
- a server (500) able to provide a link for access to the download of an application, the said access link being associated with a domain name generated by the terminal (100) on the basis of at least one contact identifier and comprising at least one indication of the operating system of the said terminal (100).
